# EUROPEAN PATENT APPLICATION

(11) **EP 1 855 396 A1**
(43) Date of publication of application: **14.11.2007**
(21) Application number: 05706644.1
(22) Date of filing: 22.02.2005
(51) Int. Cl.: H04B 10/00

(54) **AN EQUIPMENT FOR COLLECTIVELY MONITORING A WAVELENGTH IN DWDM SYSTEM AND A METHOD THEREOF**

(71) Applicant: ZTE Corporation, Shenzhen, Guangdong 518057 (CN)
(72) Inventor: CHEN, Baozhong, ZTE Plaza, Keji Road South, Shenzhen, Guangdong 518057 (CN)
(74) Representative: Dr. Weitzel & Partner
(86) International application number: PCT/CN2005/000207
(87) International publication number: WO 2006/089453

(57) **Abstract**

The present invention discloses a device and method for centralized monitoring wavelengths in the DWDM system, and said device for centralized monitoring wavelengths comprises a plurality of light emitters for emitting optical signals with different wavelengths; a multiplexer for multiplexing the optical signals as an optical multiplexing signal and transmitting the optical multiplexing signal; a power sampler for getting an optical multiplexing sampling signal from the optical multiplexing signals; a variable band-pass Filter for filtering an optical signals with given wavelengths out of the optical multiplexing sampling signal; a broadband wavelength locker for detecting the wavelength drift of the output optical signal from the variable band-pass filter; a signal processor for calculating the compensation steps according to the wavelength drift; and a controller for controlling the light emitters to adjust the wavelength according to the compensation steps. The present invention has characters such as simple construction and simple method, low cost of the system, and convenience In expanding the capacity of the system smoothly, and greatly fits for the high capacity DWDM system with a channel Interval of 50GHz or less.

## Description

### Technical Field

The present Invention Is concerned with the long-term monitoring and automatic feedback control for the wavelength drift of the optical emitter in the optical fiber communication system of DWDM (Dense Wavelength Division Multiplexing), and especially, with a device and a method for centralized detecting Individual wavelength offset In the DWDM multiplexing signal and controlling the drifted wavelengths of the DWDM system back to the standard grid.

### Background of the Invention

The DWDM technology is used to simultaneously transfer multlple-channel signals In an optical fiber through densely spaced multiple specific wavelengths, and then increase the transmission capacity of a single fiber by folds.

In order to further Increase the transmission capacity, besides Increasing the signal transmission speed of a single channel and expanding the transmission window of the fiber, the Internal between the channels can also be reduced, for example, the Interval between the channels can be reduced from 200GHz/100GHZ to 50GHz or even 25GHz.

In order to prevent the wavelength drift caused by environment and long aging of the laser, the wavelength Is generally controlled by keeping temperature and output power of the laser constant. This method can meet the demand of stability when the wavelength interval is 100GHz or above, but cannot meet the demand of wavelength stability when the wavelength Interval is 50GHz or below.

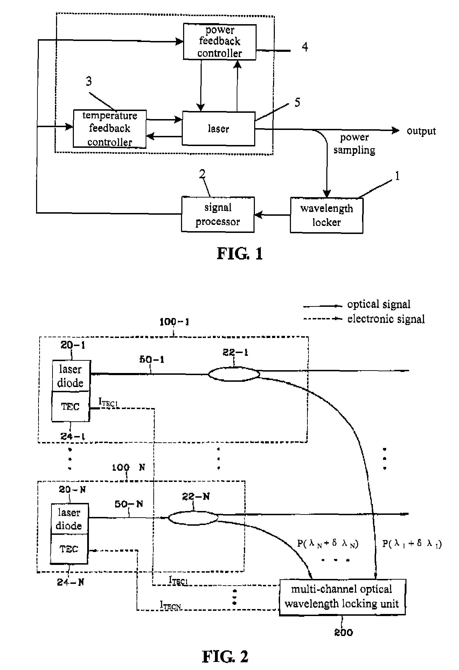

In order to meet the demand on wavelength stability when the Interval is 50GHz or below, a method using an external wavelength locker is generally adopted to guarantee the stability and accuracy of the wavelengths, which is specifically shown In figure 1 as follows: said controlling device of single channel wavelength first detects the optical power of the output signal to adjust the laser driving current and then achieve the object of keeping the output power constant; secondly, the cooling power or heating power of the laser is adjusted through the temperature feedback control by the laser, thereby keeping temperature of the laser 5 (as well as the wavelength) constant; and finally, the wavelength locker 1 detects the difference between the output wavelength and the ITU-T grid, and the signal processor 2 calculates the compensation amount, by which the temperature feedback controller 3 and the power feedback controller 4 are adjusted, thereby realizing accurate control of the wavelength and compensating the wavelength drift caused by environment changes or the aging of the laser 5.

In the DWDM system, this method requires that a wavelength locker and relevant control circuit should be built in each emitter., therefore, the cost of the system is greatly Increased. In addition, smooth upgrade from 100GHz spacing DWDM system to 50GHz spacing DWDM system cannot be realized. In other words, to guarantee the smooth upgrade from 100GHz spacing system to 50GHz spacing system, the initial deployed 100GHz spacing system should Incorporate the wavelength locker and relevant control circuit into each emitter, which increases the Initial cost for building the DWDM network.

Chinese Patent CN 1396739A brings forward a wavelength monitoring and control method for DWDM system, which can fulfill concentrated detection and distributed control, which is specifically shown in figure 2 as follows:
For this method, part of the output light of each emitter 100 Is given to the multi-channel optical wavelength locking unit 200, the multi-channel optical wavelength unit 200 has a plurality of internal optical switches for selecting Input optical signals from different emitters, and then an Internal wavelength locker detects the wavelength drift of selected signals and then gives wavelength adjusting signals for corresponding emitters to tune the wavelength back to the standard grid.
This method uses only one wavelength locker In the whole system to detect the wavelength drift, which reduced the cost than that of the method shown In figure 1. However, this method needs large amount of power splitters and expansive optical switches, and therefore the cost of the system Is still very high, and furthermore, the problem of upgrading and expanding the system smoothly is not solved satisfactorily.

### Summary of the Invention

The technical problem the present invention aims to solve Is to overcome the shortcomings in the above mentioned technologies such as high cost of the system and the limitation of the system to expand capacity smoothly, and provide a device and a method for centralized detecting wavelength In the DWDM multiplexing signal and realizing the compensation of the wavelength drift of the DWDM.

In order to realize the above objects, the present invention provides a device for centralized monitoring wavelengths In the DWDM system, comprising:
a plurality of optical emitters for emitting optical signals with different wavelengths;
a multiplexer for multiplexing the optical signals as optical multiplexing signals and
transmitting the optical multiplexing signals;
a power sampler for getting an optical multiplexing sampling signal from the optical multiplexing signals;
a variable band-pass filter for receiving the optical multiplexing sampling signal and
sequentially filtering optical signals with different wavelengths from the optical multiplexing sampling signal;
a broadband wavelength locker for detecting the wavelength drift of the optical signal from the variable band-pass filter;
a signal processor for calculating the corresponding compensation amount according to the wavelength drift; and
a controller for controlling the optical emitters to adjust the wavelength according to the compensation amount.

The above device for centralized monitoring wavelengths, wherein the variable band-pass filter can be a Fabry-Perot cavity variable filter or a MEMS (Micro-Electro-Mechanical Systems) variable filter driven by a step motor or other filters.

The above device for centralized monitoring wavelengths, wherein the multiplexer is a thin film filter, an array waveguide grating or a Bragg grating type filter.

The above device for centralized monitoring wavelengths, wherein the multiplexer is a combination of a thin film filter, an array waveguide grating or a Bragg grating type filter and a channel interleaver.

The above device for centralized monitoring wavelengths, wherein the optical emitter comprises a laser (which could be a laser diode), a power feedback controller connected with the laser for adjusting the driving current of the laser, and a temperature feedback controller connected with the laser for adjusting the temperature of the laser.

The above device for centralized monitoring wavelengths, wherein the optical signals are consistent with the ITU-T G,692 suggested channel spacing.

The above device for centralized monitoring wavelengths, wherein the wavelength locker Is composed of two internal PIN-Detectors and the wavelength drift is given by the signal difference output by the PIN-Detectors.

In order to better achieve the above objects, the present Invention further provides a method for centralized monitoring wavelengths In the DWDM system, comprising the following steps:
a. the optical multiplexer multiplexes the optical signals with different wavelengths emitted by a plurality of optical emitters as an optical multiplexing signal;
b. the power sampler gets the sampling signal from the optical multiplexing signal;
c. the variable band-pass filter receives the optical multiplexing sampling signal and sequentially filters optical signals with different wavelengths from the optical multiplexing sampling signal and outputs the specified optical signal;
d. the wavelength locker detects the wavelength drift of the optical signal from the variable band-pass filter;
e. the signal processor calculates the corresponding compensation amount according to the wavelength drift; and
f. the controller controls the optical emitters to adjust the wavelength according to the compensation amount.

In the above method for centralized monitoring wavelengths, wherein the variable band-pass filter could be a Fabry-Perot cavity variable filter or a MEMS variable filter driven by a step motor.

The above method for centralized monitoring wavelengths, wherein the multiplexer could be a thin film filter, an array waveguide grating or Bragg grating type filter.

The above method for centralized monitoring wavelengths, wherein the multiplexer Is a combination of a thin film filter, an array waveguide grating or Bragg grating type filter and a channel Interleaver.

The above method for centralized monitoring wavelengths, wherein the optical emitter comprises a laser, a power feedback controller connected with the laser for adjusting the driving current of the laser, and a temperature feedback controller connected with the laser for adjusting the temperature of the laser. The above method for centralized monitoring wavelengths, wherein the optical signals are consistent with the ITU-T G.692 suggested channel spacing.

The above method for centralized monitoring wavelengths, wherein the wavelength locker comprises two internal PIN-Detectors, and the wavelength drift Is given by the signal difference output by the PIN-Detectors.

The technical effects of the present Invention are as follows:
the present invention adopts a broadband wavelength locker, which is hardly affected by changes of the environment and the aging of the devices, as the basis of feedback control of the wavelength for all the optical emitters, so the long-term stability and accuracy of the wavelength output of the optical emitters can be guaranteed.

The present invention sequentially selects single channel signal out of the multi-channel signals through a variable filter and adopts a common broadband wavelength locker to realize the feedback control of the wavelength. Compared with the method shown In figure 1, this method for centralized monitoring wavelengths uses a set of devices to detect the wavelength drift of all the channels, saving large amounts of wavelength lockers. Compared with the method shown In figure 2, the present Invention directly uses the multiplexing signal of the DWDM system to conduct detection and don't need large amounts of optical switches and splitters. Therefore, the present invention can greatly reduce the cost of the system and simplify the structure of the system.

In addition, as the wavelength detecting device in the present invention Is separated from the emitters and can detect different numbers of wavelengths without changing the wavelength detecting device, so, compared with both the method shown in figure 1 and the method shown In figure 2, the present Invention has a great advantage of upgrading smoothly from the 100GHz spacing DWDM system to the 50GHz spacing DWDM system.

The present invention Is described In detail In the following in conjunction with the drawings and specific embodiments thereof and this is not a limitation to the present invention.

### Brief Description of the Drawings

Figure 1 is a schematic view illustrating the control of the single channel DWDM wavelength;
Figure 2 Is a schematic view illustrating the existing concentrated monitoring of the wavelengths; and
Figure 3 Is a schematic view illustrating the concentrated detecting of the DWDM wavelengths according to the present invention.

### Embodiments for Carrying Out the Present Invention

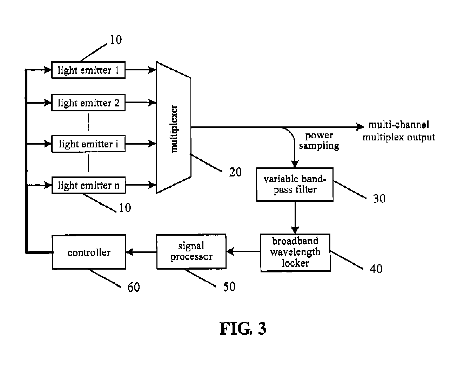

As shown In Figure 3, the device for centralized monitoring the DWDM wavelengths according to the present invention, which has low cost and can expand capacity smoothly, comprises n optical emitters 10, a multiplexer 20, a power sampler, a variable band-pass filter 30, a broadband wavelength locker 40, a signal processor 50 and a controller 60.

The functions of the parts In figure 3 are as follows: the 1-n optical emitters 10, with constant power and constant temperature control function (see the portion Indicated by the dashed frame in figure 1 for the structure of the optical emitter), output wavelengths consistent with the ITU-T G.692 suggested wavelength spacing, and can tune the wavelengths according to the control signal output by the controller 60; the multiplexer 20 combines signals with different wavelengths Into one optical fiber as an optical DWDM multiplexing signal; the variable band-pass filter 30 selectively filters a certain channel from the optical multiplexing power sampling signals; the broadband wavelength locker 40 detects the wavelength drift (compared with corresponding ITU-T G.692 standard wavelength grid) of the output signal of the variable band-pass filter; the signal processor 60 calculates the compensation amount of each channel according to the wavelength drifts of the channels; and the controller 60 tunes the wavelength of each optical emitter 10 according to each compensation amount of the channels.

The following describes how the system controls the wavelength by taking channel l |(1≤l≤ n) as an example:
the optical emitter i 10 which has constant power and constant temperature control function outputs wavelength which substantially conform to the ITU-T G.692 standard wavelength grid;
the signals Is combined by multiplexer 20 with other channels Into one optical fiber as an optical multiplexing signal, most power of the optical multiplexing signals are transmitted through the fiber, and a small portion of power are sent to the variable band-pass filter 30; the variable band-pass filter 30 tunes the pass band to the wavelength channel l, filters the signals of channel l and sends the filtered signals to the broadband wavelength locker 40;
the broadband wavelength locker 40 detects the wavelength drift (compared with the corresponding ITU-T G.692 standard wavelength grid) of the channel l;
the signal processor 50 calculates the compensation amount of the channel according to the wavelength drift of the channel i; and

According to the compensation amount of the channel I, the controller 60 tunes the wavelength of the optical emitter l back to the ITU-T G.692 standard wavelength grid.

Following the same steps, different channels are selected by adjusting the variable band-pass filter, the wavelength drift of each channel Is detected, and based on this result, the wavelength compensation performed by each optical emitter Is fulfilled, thereby the high stability and consistency with ITU-T G.692 suggested frequency spacing of each channel is achieved.

The following are steps for realizing concentrated monitoring and control of the C-band 80 channels DWDM system;
the optical emitters 1-80 with constant power and constant temperature control function output wavelengths according to the ITU-T G.692 suggested frequency spacing, and are able to adjust the wavelengths according to the control signal sent by the controller;
the multiplexer combines signals with different wavelengths Into one optical fiber as an optical multiplexing signal;
the multiplexer could be a thin film filter, a Bragg grating filter or an array waveguide grating, or a combination of a thin film filter, a Bragg grating filter or an array waveguide grating and a channel Interleaver;
the variable band-pass filter selectively filters signals of a certain channel from the optical multiplexing power sampling signals; the variable band-pass filter could be a Fabry-Perot cavity variable filter or a MEMS variable filter driven by a step motor;
the broadband wavelength locker detecting the wavelength drift (compared with the ITU-T G.692 standard wavelength grid) of the channel selected by the variable band-pass filter; Besides the etalon, the broadband wavelength locker has two internal PIN-Detectors that could output two signals to indicate the wavelength drift;
the signal processor calculates the compensation amount of each channel according to the wavelength drifts of the channels; and
the controller adjusts the wavelengths of the optical emitters according to different compensation amounts of the channels.

The following describes how the system controls the wavelength by taking channel l (1≤l≤ 80) as an example:
the light emitter l which has constant power and constant temperature control function outputs a wavelength consistent to the ITU-T G.692 suggested wavelength spacing;
the signals is combined by the multiplexer with other channels Into one optical fiber as an optical multiplexing signal, most power of the optical multiplexing signals are transmitted through the fiber, and a small portion of power are sent to the variable band-pass filter;
the variable band-pass filter tunes the pass band to the wavelength channel i, filters the signals of channel and sends the filtered signals to the broadband wavelength locker;
the broadband wavelength locker detects the wavelength drift (compared with the corresponding ITU-T G.692 standard wavelength grid) of the channel 1;
the signal processor calculates the compensation amount of the channel l according to the wavelength drift of the channel i; and

According to the compensation amount of the channel i, the controller tunes the wavelength of the optical emitter l back to the ITU-T G,692 standard wavelength grid.

Following the same steps, different channels are selected by adjusting the variable band-pass filter, the wavelength drift of each channel is detected, and based on this result, the wavelength compensation performed by each optical emitter is fulfilled, thereby the high stability and consistency with ITU-T G.692 suggested frequency spacing of each channel is achieved.

Of course, the present invention may have many other embodiments, while In the circumstances which do not depart from the spirit of the present invention and the essence thereof, those skilled In the art who are familiar with the present technical field can make various corresponding changes or variations according to the present invention, while such corresponding changes or variations should belong to the protection scope of the claims as annexed In the present Invention.

### Industrial Applicability

The present Invention gives a device which adopts the combination of a variable filter and a broadband wavelength locker, and performs concentrated wavelength offset detection In the DWDM multiplexing signal and realizing the feedback control of the wavelengths of the DWDM system. The device has characters such as simple structure, low cost of the system, and convenience In expanding the capacity of the system smoothly, and greatly fits for the high capacity DWDM system with a channel Interval of 50GHz or less.

## Claims

1. A device for centralized monitoring wavelengths In the Dense Wavelength Division Multiplexing system, **characterized in** comprising:
a plurality of optical emitters for emitting optical signals with different wavelengths;
a multiplexer for multiplexing the optical signals as optical multiplexing signals and transmitting the optical multiplexing signals;
a power sampler for getting the optical multiplexing sampling signal from the optical multiplexing signals;
a variable band-pass filter for receiving the optical multiplexing sampling signal and sequentially filtering optical signals with different wavelengths out of the optical multiplexing sampling signal and output the filtered optical signals;
a broadband wavelength locker for detecting the wavelength drift of the optical signal from the variable band-pass filter;
a signal processor for calculating corresponding compensation amount according to the wavelength drift; and
a controller for controlling the optical emitters to adjust the wavelengths according to the compensation amount.

2. The device for centralized monitoring wavelengths according to claim 1, **characterized In that** the variable band-pass filter is a Fabry-Perot cavity variable filter or a Micro-Electro-Mechanlcal System variable filter driven by a step motor.

3. The device for centralized monitoring wavelengths according to claim 1, **characterized In that** the optical multiplexer Is a thin film filter, an array waveguide grating or a Bragg grating type filter.

4. The device for centralized monitoring wavelengths according to claim 1, **characterized In that** the multiplexer Is a combination of a thin film filter, an array waveguide grating or a Bragg grating type filter and a channel Interleaver.

5. The device for centralized monitoring wavelengths according to claim 1, 2, 3 or 4, **characterized In that** the light emitter comprises a laser, a power feedback controller connected with the laser for adjusting the driving current of the laser, and a temperature feedback controller connected with the laser for adjusting the temperature of the laser.

6. The device for centralized monitoring wavelengths according to claim 1, 2, 3 or 4, **characterized in that** the optical signal conforms to the ITU-T G.692 suggested wavelength spacing.

7. The device for centralized monitoring wavelengths according to claim 1, 2, 3 or 4, **characterized in that** the wavelength locker Is composed of two Internal PIN-Detectors, and the wavelength drift is given by the signal difference output by the PIN-Detectors.

8. A method for centralized monitoring wavelengths in the DWDM system, **characterized In** comprising the following steps:
a. an optical multiplexer multiplexing optical signals with different wavelengths emitted by a plurality of optical emitters as an optical multiplexing signal;
b. a power sampler getting a sampling signal from the optical multiplexing signal;
c. a variable band-pass filter receiving the optical multiplexing sampling signal and sequentially selecting optical signals with different wavelengths from the optical multiplexing sampling signal and output the optical signals;
d. a wavelength locker detecting the wavelength drift of the optical signals from the variable band-pass filter;
e. a signal processor calculating the corresponding compensation amount according to the wavelength drift; and
f. a controller controlling the optical emitters to adjust the wavelength according to the compensation amount.

9. The method for centralized monitoring wavelengths according to claim 8, **characterized In that** the variable band-pass filter is a Fabry-Perot cavity variable filter or a MEMS variable filter driven by a step motor.

10. The method for centralized monitoring wavelengths according to claim 8, **characterized in that** multiplexer is a thin film filter, an array waveguide grating or a Bragg grating type filter.

11. The method for centralized monitoring wavelengths according to claim 8, **characterized in that** the multiplexer is a combination of a thin film filter, an array waveguide grating or a Bragg grating type filter and a channel Interleaver.

12. The method for centralized monitoring wavelengths according to claim 8, 9, 10 or 11, **characterized in that** the optical emitter comprises a laser, a power feedback controller connected with the laser for adjusting the driving current of the laser, and a temperature feedback controller connected with the laser for adjusting the temperature of the laser.

13. The method for centralized monitoring wavelengths according to claim 8, 9, 10 or 11, **characterized In that** the optical signal conforms to the ITU-T G.692 standard wavelength grid.

14. The method for centralized monitoring wavelengths according to claim 8, 9, 10 or 11, **characterized in that** the wavelength locker Is composed of two Internal PIN-Detectors, and the wavelength drift is given by the signal difference output by the PIN-Detectors.
